# EUROPÄISCHE PATENTSCHRIFT

(11) **EP 1 012 373 B1**
(45) Veröffentlichungstag und Bekanntmachung des Hinweises auf die Patenterteilung: **05.11.2003**
(21) Anmeldenummer: 98947438.2
(22) Anmeldetag: 18.08.1998
(51) Int. Cl.: D06N 1/00

(54) **LEITFÄHIGER LINOLEUM-BODENBELAG**
CONDUCTIVE LINEOLEUM FLOOR COVERING
REVETEMENT DE SOL CONDUCTEUR A BASE DE LINOLEUM

(30) Priorität: 27.08.1997 DE 19737397
(43) Veröffentlichungstag der Anmeldung: 28.06.2000
(73) Patentinhaber: DLW Aktiengesellschaft, D-74321 Bietigheim-Bissingen (DE)
(72) Erfinder: BURMEISTER, Guido, D-27793 Wildeshausen (DE); BRUMM, Karen, D-27751 Delmenhorst (DE)
(74) Vertreter: Müller-Boré & Partner Patentanwälte
(86) Internationale Anmeldenummer: EP9805246
(87) Internationale Veröffentlichungsnummer: WO99010592

(56) Entgegenhaltungen:
- EP-A- 0 174 042
- GB-A- 2 159 184
- DATABASE WPI Section Ch, Week 7517 Derwent Publications Ltd., London, GB; Class A84, AN 75-28560W XP002089299 & SU 432 253 A (NEW BLDG MATERIALS RES) , 14. November 1974

## Beschreibung

Die Erfindung betrifft einen elektrisch leitfähigen Bodenbelag auf Linoleumbasis (im folgenden auch als Linoleum-Bodenbelag bezeichnet). Durch Zusatz mindestens eines Derivats des Imidazols, Imidazolins, Benzimidazols oder Morpholins, insbesondere mindestens einer kationenaktiven Verbindung mit einem quartären Stickstoffatom mindestens eines Derivats des Imidazols, Imidazolins oder Benzimidazols wird der Linoleum-Bodenbelag elektrisch leitfähig gemacht bzw. antistatisch ausgerüstet.

Die Herstellung von Linoleum ist seit langem bekannt und geschieht in der Weise, daß man zunächst alle Komponenten wie Linoleumzement, mindestens einen Füllstoff und mindestens ein Färbemittel in einem Mischwerk, z.B. einem Kneter, Walzwerk oder Extruder, zu einer möglichst homogenen Grundmasse vermischt. Als Füllstoff werden üblicherweise Holzmehl, Korkmehl, Kreide, Kaolin, Schwerspat und dergleichen verwendet. Die Mischmasse enthält üblicherweise mindestens ein Färbemittel wie ein Pigment, z.B. Titandioxid, Eisenoxid, Zinkoxid oder andere übliche Färbemittel auf Basis von anorganischen und organischen Farbstoffen. Eine typische Linoleumzusammensetzung enthält, bezogen auf das Gewicht der Nutzschicht, ca. 40 Gew.-% Bindemittel, ca. 30 Gew.-% organische Füllstoffe, ca. 20 Gew.-% anorganische mineralische Füllstoffe und ca. 10 Gew.-% Färbemittel. Ferner können in der Mischmasse übliche Additive wie Verarbeitungshilfsmittel, Antioxidantien, UV-Stabilisatoren, Gleitmittel und Radikalstarter oder auch Sikkative enthalten sein, die in Abhängigkeit des Bindemittels ausgewählt werden.

Zur Herstellung eines einfarbigen Linoleumbelages wird die so erhaltene Mischmasse einem Walzwerk zugeführt und unter Druck und bei einer Temperatur von üblicherweise 10 bis 150°C (abhängig von der Rezeptur und der Verfahrenstechnik) auf ein Trägermaterial gepreßt. Als Trägermaterial kann ein Material auf der Basis natürlicher und/oder synthetischer Gewebe oder Gewirke sowie textiler Werkstoff eingesetzt werden. Beispielsweise können Jutegewebe, Mischgewebe aus natürlichen Fasern, wie Baumwolle, Zellwolle und dergleichen eingesetzt werden.

Beim Pressen der Mischmasse auf das Trägermaterial wird das Walzwerk so eingestellt, daß Bodenbelagsbahnen in Dicken von etwa 2 bis 6 mm, insbesondere 2 bis 4 mm, hergestellt werden.

Die Mischmasse kann, wie zuvor beschrieben, direkt auf den Träger aufgepreßt werden, was zu einschichtigen Belägen führt. Die Mischmasse kann jedoch auch einem Walzwerk zugeführt werden, ohne daß ein Trägergewebe mitläuft. Die nach Verlassen des Walzwerks erhaltene trägerlose Linoleumbahn, das sogenannte Fell, kann dann mittels eines Kalanders oder Pressen auf einen einschichtigen Linoleumbelag gepreßt werden. Man spricht in diesem Fall von mehrschichtigen (hier: zweischichtigen) Belägen. Die Rezepturzusammensetzung beider Schichten ist im wesentlichen gleich, lediglich die Pigmentzusammensetzung kann variieren.

Soll ein farbig gemusterter Bodenbelag hergestellt werden, werden verschiedenfarbige, granulierte Mischmassen bzw. Grundmassen vermischt und anschließend einem Walzwerk zugeführt und dann verpreßt.

Da die so erhaltenen Linoleum-Bodenbelagsbahnen noch keine ausreichende Zug- und Druckfestigkeit aufweisen, werden diese in dem nachfolgenden Reifeprozeß in Reifekammern bei einer Temperatur von etwa 40 bis 100°C, üblicherweise 60 bis 80°C, während eines Zeitraumes von einigen Tagen bis zu mehreren Wochen getrocknet, wobei das Bindemittel weitervernetzt und dem Material die gewünschte Zug- und Druckfestigkeit gibt.

Bezüglich weiterer Einzelheiten der Linoleumherstellung sei auf Ullmann, Enzyklopädie der technischen Chemie, 4. Auflage, Band 12, S. 24 und 25, verwiesen.

Ein Nachteil des bisher bekannten Linoleums besteht darin, daß es wegen seiner relativ hohen Ableitwerte (RA > 10¹¹ Ohm) nicht in Räumen verwendet werden kann, zu deren Funktionsprinzipien es gehört, daß der Bodenbelag bestimmte elektrische Ableitwerte aufweisen muß, wie beispielsweise Operationsräume und Computerräume. Bei derartigen Anwendungen ist es bekannt, daß der elektrische Ableitwiderstand des Linoleum-Bodenbelags durch Zusatz von elektrisch leitfähigen Füllstoffen, wie z.B. Spezialrußen und Metallpulvern, herabgesetzt werden kann. Dies hat jedoch den Nachteil, daß die Gebrauchseigenschaften durch den jeweiligen Zusatz verschlechtert werden. Weiterhin sind die farblichen Gestaltungsmöglichkeiten sehr eingeschränkt.

DE 34 16 573 C2 (DLW AG) beschreibt daher leitfähige, antistatisch ausgerüstete Linoleumbahnen, welche durch einen Zusatz von Derivaten des Imidazolins, Imidazols oder Morpholins elektrisch leitfähig gemacht worden sind. Diese Zusätze werden in Mengen von bis zu 15 Gew.-% der Linoleumrezeptur zugegeben. Das gemäß DE 34 16 573 C2 zugesetzte Leitfähigkeitsmittel kann flüssig oder als flüssige Zubereitung der Linoleummasse zugegeben werden. Dickflüssige Mittel werden zwar zum Teil vom verwendeten Füllstoff wie Holzmehl oder Aluminiumhydroxid und Titandioxid aufgesogen. Trotzdem weist die Mischmasse eine andere rheologische Beschaffenheit auf als eine reguläre Linoleummischmasse ohne Zusatz des Leitfähigkeitsmittels. Mit anderen Worten schmiert die so erhaltene Mischmasse stärker als eine normale "trockenere" Mischmasse. Durch das "Schmieren" sind daher die gewünschten Muster nur schwer zu erzielen. Aus diesem Grund kann mit den obengenannten Zusätzen auch leitfähig gemachte Linoleumbahnenware bisher nicht in Dicken von 2,0 mm angeboten werden, sondern lediglich in 2,5 mm oder dicker.

Weiterhin ergibt sich das Problem, daß man trotz dieses Flüssigkeitszusatzes von Leitfähigkeitsmitteln zur Mischmasse akzeptable Reifezeiten erzielen will. Dazu können unter anderem Radikalstarter als Reifebeschleuniger eingesetzt werden. Aufgrund der Eigenart einiger dieser Radikalstarter können dabei aber unter thermischer Belastung deutliche Geruchsbelästigungen an den Maschinen sowie im fertigen Linoleum auftreten, was aus bekannten Gründen unerwünscht ist.

Es ist daher die Aufgabe der vorliegenden Erfindung, eine als Fußbodenbelag geeignete Linoleumbahn bereitzustellen, die einen niedrigen elektrischen Ableitwiderstand RA (< 10⁸ Ohm) aufweist, jedoch die vorgenannten Mängel des Standes der Technik vermeidet und ohne Zusatz von Radikalstartern akzeptable Reifezeiten für die Linoleum-Bodenbelagsbahnen erzielt.

Diese Aufgabe wird durch den in Anspruch 1 gekennzeichneten Gegenstand gelöst.

In den Unteransprüchen sind vorteilhafte Ausführungsformen der Erfindung enthalten.

Es hat sich nun im Rahmen der vorliegenden Erfindung gezeigt, daß durch den Zusatz von Kieselgur zu der Linoleummasse die Mischmasse weniger schmierig ist und dadurch die reologischen Eigenschaften deutlich verbessert werden können. Durch den Zusatz von Kieselgur, wurde die Reifezeit der Bahnenware verkürzt und der Reifeprozeß in den Reifekammern während eines Zeitraums von ca. 1 Monat/4 Wochen erreicht. Die Verkürzung der Reifezeit gegenüber dem Stand der Technik beträgt im Mittel ca. 1 Woche, die absolute Reifezeit betrug jedoch bisher in Einzelfällen bis zu 7 Wochen und konnte durch Zusatz von Kieselgur auf ca. 4 Wochen reduziert werden.

Durch den Zusatz von Kieselgur kann die Zugabe von Radikalstartern entfallen, da bereits die zugegebene Kieselgur die Reifezeit hinlänglich verkürzt. Durch den Wegfall des Radikalstarters entfällt somit ebenfalls die Geruchsbelästigung bei der Produktion der Linoleumbahn, insbesondere beim Erwärmen der Mischung vor der Verarbeitung, sowie beim Kunden.

Die Erfindung betrifft daher einen elektrisch leitfähigen Bodenbelag auf Linoleumbasis mit einem Gehalt an einem die leitfähigen und antistatischen Eigenschaften des Belags verbessernden Zusatz. Der Belaq enthält als Zusatz mindestens ein Derivat des Imidazols, Imidazolins oder Moroholins, vorzuasweise eine kationenaktive Verbindung mit einem auartären Stickstoffatom. Derartige Derivate sind an sich als Antistatika bekannt (vgl. DE 34 16 573 C2).

Beispiele für erfindungsgemäß einsetzbare Verbindungen sind:
1. Imidazolderivate der Formel: 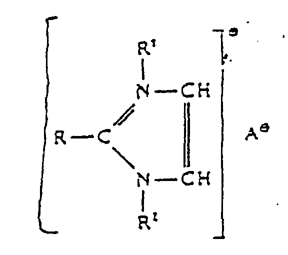 worin bedeuten:
   - R: einen aliphatischen Rest, insbesondere einen Alkylrest mit 6 bis 30 C-Atomen;
   - R¹ und R²: Wasserstoffatome, Alkyl- oder Hydroxyalkylreste, insbesondere Alkyl- oder Hydroxyalkylreste mit 1-5 C-Atomen und
   - A⁻: ein Anion, wie sie für kationaktive oberflächenaktive Verbindungen typisch sind.
   In typischer Weise kann R z.B. für einen Alkylrest mit 12-18 C-Atomen stehen, R¹ und R² sind Methyl- oder Ethylreste und A⁻ steht für einen Rest der Formel ⁻OSO₃R³, in der R³ ein Alkylrest mit vorzugsweise 1-5 C-Atomen ist, oder für ein Halogenatom.
2. Benzimidazolderivate der Formel: 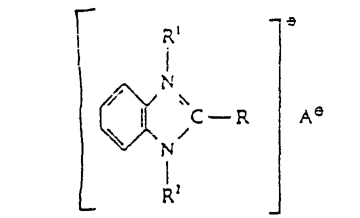 worin R, R¹, R² und A⁻ die bereits angegebene Bedeutung haben. In typischer Weise steht R für einen Rest der Formel -C₁₇H₃₅, R¹ und R² sind Methylreste und A⁻ steht für ein Anion der Formel ⁻OSO₃CH₃.
3. Morpholinderivate der Formel: 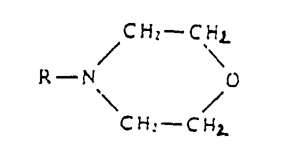 worin R für einen Alkylrest mit 1 - 30, vorzugsweise 6 - 30 C-Atomen steht.
4. Quartäre Morpholinderivate der Formel: 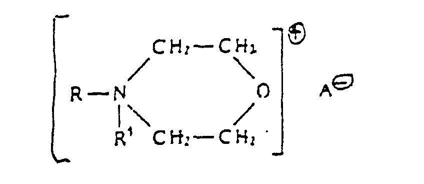 in der R, R¹ und A⁻ die bereits angegebene Bedeutung haben.
5. Imidazolinderivate der Formel: 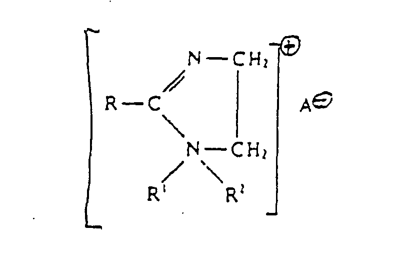 worin R, R¹, R² und A⁻ die bereits angegebene Bedeutung haben. In typischer Weise steht R beispielsweise für einen Alkylrest mit 12 - 18 C-Atomen, R¹ ist ein Methylrest, R² ein Rest der Formel -C₂H₄OH und A⁻ steht für ein Chloridion.

Die Einsatzmenge der erfindungsgemäß verwendeten Verbindungen oder Verbindungsgemische richtet sich nach der Rezeptur für die entsprechende Linoleumqualität und nach dem Zeitpunkt der Zugabe.

Das Einarbeiten des antistatischen Wirkstoffes erfolgt vorzugsweise zum frühestmöglichen Zeitpunkt, um eine homogene Verteilung des antistatischen Wirkstoffes zu erzielen. Die Zusatzmenge des antistatischen Wirkstoffes liegt hier vorzugsweise zwischen 0,5 und 15 Gew.-%, bezogen auf die Gesamtrezeptur.

Es hat sich im Rahmen der vorliegenden Erfindung gezeigt, daß ein Linoleum-Bodenbelag mit der gewünschten elektrischen Leitfähigkeit (Ableitwiderstand RA von < 10⁸ Ohm) auf folgende Weise erhältlich ist:

Es werden wie bisher Mischmassen aus den für Linoleum-Bodenbeläge benötigten Komponenten hergestellt. Dabei werden zusätzlich noch 0,5 bis 30 Gew.-%, vorzugsweise 3 bis 5 Gew.-%, Kieselgur mit den anderen trockenen Füllstoffen in die Linoleummasse zudosiert. Das zudosierte Leitfähigkeitsmittel (Derivat des Imidazols, Imidazolins oder Morpholins) wird während des Mischvorgangs von den Füllstoffen aufgesogen, insbesondere von der Kieselgur, so daß die Mischmasse weniger schmierig ist. Auf die Zugabe von Radikalstarter wurde ganz verzichtet. Der Bodenbelag hatte einen elektrischen Ableitwiderstand RA von < 10⁸ Ohm. Die Reifezeit der Linoleumbahn verkürzte sich um ca. 1 Woche. Erfindungsgemäß kann Bahnenware mit einer Dicke von 2,0 mm und einer standardisierten Musterung erzielt werden.

Der erfindungsgemäße Bodenbelag besteht z.B. aus mindestens einer einschichtigen Bahn, die auf ein Trägermaterial, z.B. Jute aufgebracht ist. Der Bodenbelag kann aber auch aus zweischichtigen oder mehrschichtigen Bahnen bestehen, die auf ein Trägermaterial aufgebracht sind.

In einer besonderen Ausführungsform der Erfindung enthält die Linoleumbahn eine Unterschicht aus Korkment.

In einer anderen Ausführungsform der Erfindung bei dem sogenannten Korklinoleum wird als Füllstoff Korkgranulat verwendet.

Bei dem erfindungsgemäß eingesetzten Sorptionsmittel handelt es sich um Kieselgur (oft auch als Kieselerde bezeichnet). Der SiO₂-Gehalt beträgt mindestens 70 %, vorzugsweise 71 - 93 %. Die eingesetzte Kieselgur gehört zu den natürlichen Kieselguren (Süß- und Salzwasser) und kann sowohl die geglühten (kalzinierten) Typen als auch die einfach getrockneten Typen umfassen. Hinsichtlich der Saugeigenschaften hat das Kieselgur eine Ölabsorption von mindestens 100 Gew.-%. vorzuasweise von 125 bis 230 Gew.-%. und eine Wasserabsorbtion von mindestens 125 Gew.-%. vorzugsweise zwischen 150 bis 280 Gew.%.

In einer ganz besonders bevorzugten Ausführungsform der Erfindung wird eine Kieselgurtype, bestehend aus natürlichen Salzwasser-Diatomeenerden mit einem SiO₂-Gehalt von 74 % und einer BET-Oberfläche von 50,7 m²/g verwendet. Die Ölabsorption dieser spezifischen Kieselgurtype beträgt 125 Gew.-% , die Wasserabsorption 150 Gew.-%.

Da es sich bei Kieselgur um ein Naturprodukt handelt, sind die Schwankungen relativ groß, je nach Fundstätte sowie Grad und Art der Aufreinigung.

Die Erfindung wird nun im folgenden mit Hilfe der nachstehenden Beispiele näher erläutert.

### Beispiel 1

Es wird eine leitfähige unifarbene Linoleum-Mischmasse hergestellt, indem zunächst alle trockenen Zutaten in einem Pulvermischer homogen gemischt werden. Dieses Prämix besteht aus organischen Füllstoffen wie Holzmehl und Korkmehl in einer Menge von 31 Gew.-%, bezogen auf die gesamte Mischmasse. Als anorganische Füllstoffe werden Pigmente, überwiegend Titandioxid, in einer Menge von 13 Gew.-%, bezogen auf das Gewicht der Mischmasse, sowie sonstige Füllstoffe wie Äluminiumhydroxid zu 12 Gew.-%, bezogen auf das Gewicht der Mischmasse, zugesetzt. Außerdem wurde erfindungsgemäß zu diesem Prämix 3 Gew.-% Kieselgur (SiO₂-Gehalt 74%, BET-Oberfläche 50,7 m²/g) bezogen auf die gesamte Mischmasse, zugesetzt (wichtig ist dabei, daß das Kieselgur vorgelegt wird, bevor das flüssige Leitfähigkeitsmittel zudosiert wird). Dieses Prämix wird zusammen mit dem flüssigen Leitfähigkeitsmittel (6 Gew.-%) und dem Linoleumzement (35 Gew.-%), bezogen auf die Mischmasse), verknetet. Diese Mischmasse wurde mittels eines Walzwerks zu einer Linoleumbahn gewalzt und anschließend mittels eines Kalanders auf ein Trägermaterial, hier eine einschichtige Linoleumbahn aus Jute, gepreßt. Anschließend wurde die Bahn in einer Reifekammer in üblicher Weise während einer Zeit von ca. 4 Wochen zum fertigen Bodenbelag gereift/getrocknet.

Der Bodenbelag weist einen elektrischen Ableitwiderstand von RA 3,2 x 10⁷ Ohm, gemessen nach DIN 51935, auf.

Der erfindungsgemäß hergestellte Bodenbelag zeigte die gewünschte marmorierte Struktur, die noch sichtbar blieb. Die Dicke der Ware betrug 2 mm.

### Beispiel 2

Es wurde eine Linoleumbahn hergestellt aus:
(a) (Beispiel-Rezeptur für Korkment)

| | |
|---|---|
| 36 Gew.-% | Zement |
| 10 Gew.-% | Holzmehl |
| 10 Gew.-% | Scrapmehl (feingemahlenes, gereiftes Linoleum) |
| 30 Gew.-% | Korkmehl |
| 8 Gew.-% | Leitfähigkeitsmittel |
| 4,5 Gew.-% | Kieselgur |
| 1,5 Gew.-% | Pigmente |

| | |
|---|---|
| Ableitwiderstand | 5 x 10⁶ Ohm |
| Reifezeit | 10 Tage |
| Dicke | 3,5 mm |

oder
(b)

| | |
|---|---|
| 30 Gew.-% | Zement |
| 5 Gew.-% | Holzmehl |
| 25 Gew.-% | Scrapmehl |
| 30 Gew.-% | Korkmehl |
| 6 Gew.-% | Leitfähigkeitsmittel |
| 3 Gew.-% | Kieselgur |
| 1 Gew.-% | Pigmente |

| | |
|---|---|
| Leitfähigkeit | 2 x 10⁷ Ohm |
| Reifezeit | 7 Tage |
| Dicke | 3,2 mm. |

### Beispiel 3

Es wurde eine Linoleumbahn hergestellt aus:
(Beispiel-Rezeptur für Korklinoleum)

| | |
|---|---|
| 34 Gew.-% | Zement |
| 11 Gew.-% | Holzmehl |
| 12 Gew.-% | Korkmehl |
| 17 Gew.-% | Aluminiumhydroxid |
| 15 Gew.-% | Pigmente (überwiegend Titandioxid) |
| 2 Gew.-% | sonstige Pigmente |
| 3 Gew.-% | Kieselgur |
| 8 Gew.-% | Leitfähigkeitsmittel |

| | |
|---|---|
| Ableitwiderstand | 3 x 10⁷ Ohm |
| Reifezeit | 28 Tage |
| Dicke | 3,2 mm. |

## Patentansprüche

1. Elektrisch leitfähiger Bodenbelag auf Linoleumbasis mit einem Gehalt an einem die leitfähigen und antistatischen Eigenschaften des Belags verbessernden flüssigen Zusatzes, welcher mindestens ein Derivat des Imidazols, Imidazolins, Benzimidazols oder Morpholins umfaßt, **dadurch gekennzeichnet, daß** der Belag 0,5 bis 30 Gew.-% Kieselgur, bezogen auf das Gewicht der Linoleum-Mischmasse, enthält.

2. Bodenbelag nach Anspruch 1, **dadurch gekennzeichnet, daß** der Belag als Zusatz mindestens eine kationenaktive Verbindung mit einem quartären Stickstoffatom mindestens eines Derivats des Imidazols, Imidazolins oder Benzimidazols enthält.

3. Bodenbelag nach einem der Ansprüche 1 oder 2, **dadurch gekennzeichnet, daß** der Belag 3 bis 5 Gew.-% Kieselgur, bezogen auf das Gewicht der Linoleum-Mischmasse, enthält.

4. Bodenbelag nach einem oder mehreren der Ansprüche 1 bis 3, **dadurch gekennzeichnet, daß** der Bodenbelag einen elektrischen Ableitwiderstand RA von < 10⁸ Ohm aufweist.

5. Bodenbelag nach einem oder mehreren der vorhergehenden Ansprüche, **dadurch gekennzeichnet, daß** der die leitfähigen Eigenschaften verbessernde Zusatz in Mengen von 0,5 bis 15 Gew.-% im Belag enthalten ist, bezogen auf das Gewicht der Linoleum-Mischmasse.

6. Bodenbelag nach einem oder mehreren der vorhergehenden Ansprüche, **dadurch gekennzeichnet, daß** der Bodenbelag aus mindestens einer einschichtigen Bahn besteht.

7. Bodenbelag nach einem oder mehreren der vorhergehenden Ansprüche, **dadurch gekennzeichnet, daß** er auf ein Trägermaterial aufgebracht ist.

8. Bodenbelag nach einem oder mehreren der vorhergehenden Ansprüche, **dadurch gekennzeichnet, daß** in der zur Herstellung des Belags verwendeten Linoleum-Mischmasse kein Radikalstarter eingesetzt wird.

9. Bodenbelag nach einem oder mehreren der vorhergehenden Ansprüche, **dadurch gekennzeichnet, daß** er eine Unterschicht aus Korkment aufweist.

10. Bodenbelag nach einem oder mehreren der vorhergehenden Ansprüche, **dadurch gekennzeichnet, daß** die Bodenbelagsbahn als Füllstoff Korkgranulat enthält.

## Claims

1. Electrically conductive linoleum-based floor covering having a content of a liquid additive for enhancing the conductive and antistatic properties of the floor covering which comprises at least one derivative of imidazole, imidazoline, benzimidazole or morpholine, **characterized in that** the floor covering contains 0.5 % to 30% by weight kieselguhr in relation to the weight of the mixed linoleum mass.

2. Floor covering according to claim 1, **characterized in that** the floor covering contains as additive at least one cationic active compound having a quaternary nitrogen atom of at least one derivative of said imidazole, imidazoline or benzimidazole.

3. Floor covering according to claim 1 or 2, **characterized in that** the floor covering contains 3% to 5% by weight kieselguhr in relation to the weight of the mixed linoleum mass.

4. Floor covering according to one or more of the claims 1 to 3, **characterized in that** the floor covering has an electrical leakage resistance RA of < 10⁸ Ohm.

5. Floor covering according to one or more of the preceding claims, **characterized in that** the additive for enhancing the conductive properties is contained in amounts of 0.5% to 15% by weight in the floor covering relative to the weight of the mixed linoleum mass.

6. Floor covering according to one or more of the preceding claims, **characterized in that** the floor covering consists of at least one single-layer sheet.

7. Floor covering according to one or more of the preceding claims, **characterized in that** it is applied to a backing material.

8. Floor covering according to one or more of the preceding claims, **characterized in that** no radical initiator is used for the manufacturing of the mixed linoleum mass used for the floor covering.

9. Floor covering according to one or more of the preceding claims, **characterized in that** it has an underlay of corkment.

10. Floor covering according to one or more of the preceding claims, **characterized in that** the floor covering web contains cork granulate as filler.

## Revendications

1. Revêtement de sol électriquement conducteur à base de linoléum avec une teneur en additif fluide améliorant les propriétés conductrices et antistatiques du revêtement, lequel comprend au moins un dérivé de l'imidazole, de l'imidazoline, du benzimidazole cu de la morpholine, **caractérisé en ce que** le revêtement contient de 0,5 à 30 % en poids de kieselguhr, rapportés au poids de la masse du mélange du linoléum.

2. Revêtement de sol selon la revendication 1, **caractérisé en ce que** le revêtement contient en tant qu'additif au moins un composé cationique avec un atome d'azote quaternaire et au moins un dérivé de l'imidazole, de l'imidazoline ou du benzimidazole.

3. Revêtement de sol selon l'une des revendications 1 ou 2, **caractérisé en ce que** le revêtement contient de 3 à 5 % en poids de kieselguhr, rapportés au poids de la masse du mélange du linoléum.

4. Revêtement de sol selon l'une ou plusieurs des revendications 1 à 3, **caractérisé en ce que** le revêtement de sol présente une résistance de fuite électrique RA inférieure à 10⁸ ohms.

5. Revêtement de sol selon l'une ou plusieurs des revendications précédentes, **caractérisé en ce que** l'additif améliorant les propriétés conductrices est contenu dans une quantité allant de 0,5 à 15 % en poids dans le revêtement, rapportée au poids de la masse du mélange du linoléum.

6. Revêtement de sol selon l'une ou plusieurs des revendications précédentes, **caractérisé en ce que** le revêtement de sol consiste au moins en un lé monocouche.

7. Revêtement de sol selon l'une ou plusieurs des revendications précédentes, **caractérisé en ce qu'**un matériau de support est appliqué.

8. Revêtement de sol selon l'une ou plusieurs des revendications précédentes, **caractérisé en ce qu'**aucun amorceur radicalaire n'est introduit dans la masse du mélange du linoléum utilisé pour la fabrication du revêtement.

9. Revêtement de sol selon l'une ou plusieurs des revendications précédentes, **caractérisé en ce qu'**il présente une sous-couche à base de liège.

10. Revêtement de sol selon l'une ou plusieurs des revendications précédentes, **caractérisé en ce que** le lé de revêtement de sol contient un granulat à base de liège en tant que charge.
